# EUROPÄISCHE PATENTANMELDUNG

(11) **EP 2 166 202 A1**
(43) Veröffentlichungstag der Anmeldung: **24.03.2010**
(21) Anmeldenummer: 09156177.9
(22) Anmeldetag: 25.03.2009
(51) Int. Cl.: F01M 13/04, F16N 39/00, F01M 13/02

(54) **Vorrichtung zur Abscheidung von Öl aus einem Luftstrom**

(30) Priorität: 19.09.2008 EP 08164661
(71) Anmelder: MANN+HUMMEL GmbH, 71638 Ludwigsburg (DE)
(72) Erfinder: Kolczyk, Markus, 74395, Mundelsheim (DE); Heikamp, Wolfgang, 67165, Waldsee (DE)

(57) **Zusammenfassung**

Die Erfindung betrifft eine Vorrichtung zur Abscheidung von Öl aus den Kurbelgehäus e-gasen einer Brennkraftmaschine (1), wobei das gereinigte Gas bevorzugt dem Lufta n-saugweg der Brennkraftmaschine (1) wieder zugeführt wird, mit einem Filterelement (3) und mindestens einer Druckbeaufschlagungseinheit (4) für das Kurbelgehäusegas zur Durchströmung des Filterelements (3). Es ist mindestens ein zusätzlicher mechanischer Vorabscheider (9) zur Abscheidung von Öl vor dem Filterelement (3) und/oder minde s-tens ein mechanischer Nachabscheider (9') nach dem Filterelement (3) vorgesehen. Als Druckbeaufschlagungseinheit (4) des Luftstroms kann eine Pumpe oder ein Verdic hter vor oder hinter dem Filterelement (3) angeordnet sein. Insbesondere kann eine Regelung der Druckbeaufschlagungseinheit (4) in Abhängigkeit vom herrschenden Druck im Kurbelgehäuse erfolgen.

## Beschreibung

### Technisches Gebiet

Die Erfindung betrifft eine Vorrichtung zur Abscheidung von Öl aus einem Luftstrom nach der Gattung des Hauptanspruchs.

### Stand der Technik

Bei einer Vielzahl von Anwendungen im Maschinenbau und insbesondere in der Kraftfahrzeugtechnik treten zum Beispiel Gase auf, die mit festen oder flüssigen Partikeln verunreinigt sind, wie zum Beispiel Metall- oder sonstige Schmutzteile und auch Öl- oder Kraftstofftröpfchen und Rußpartikel, die für eine Weiterbehandlung des Gases schädlich sind und unter Umständen auch sehr schnell zu Verstopfungen in Filtern führen können. Insbesondere ist dies bei dem Kurbelwellengehäusegas einer Brennkraftmaschine der Fall, das dann in der Regel über einen Ölabscheider bzw. einem sogenannten Luftentölelement zur Beseitigung der Verunreinigung geführt wird.

Aus der EP 0 611 876 B1 ist beispielsweise ein Ölabscheider für die Gase eines Kurbelwellengehäuses einer Brennkraftmaschine bekannt, bei dem ein Filterelement vorhanden ist, das von den Durchblasgasen durchströmt wird und bei dem das abgeschiedene Öl über einen Ölrücklauf in einen Ölbehälter zurückgeführt wird. Die so entölten Durchblasgase werden dann dem Luftansaugsystem der Brennkraftmaschine wieder zugeführt.

Bei diesem bekannten Ölabscheider wird zur Erhöhung der Effizienz der Entölung mittels eines Unterdrucks der Durchfluss der Durchblasgase durch den Ölabscheider verbessert, der über eine Ejektordüse erzeugt wird. Der Unterdruck wird dabei der Druckluft aus der Druckluftversorgung eines Kraftfahrzeugs entnommen und über eine einstellbare Drossel wird die Menge der zuzuführenden Druckluft geregelt.

Die Schrift DE 203 18 633 U1 zeigt eine Einrichtung für die Rück- oder Abführung und die Entölung des Kurbelgehäuse-Entlüftungsgases einer Brennkraftmaschine, bei dem die Einrichtung einschließlich der Pumpe zur Erzeugung des Unterdruckes ein Modul oder Teil eines Moduls ist.

In dem Dokument EP 1 464 797 B1 wird ein Ölabscheider für die Reinigung von Ölnebel enthaltendem Kurbelgehäuseentlüftungsgas einer Brennkraftmaschine beschrieben mit einem rotierenden Ölabscheideelement oder Laufrad, das ohne Achsdurchführung berührungslos in Drehung versetzbar ist.

Das Dokument DE 101 53 120 A1 wie auch das zur gleichen Patentfamilie gehörende Dokument DE 2003 18 633 U1 offenbart eine Einrichtung für die Entlüftung des Kurbelgehäuse einer Brennkraftmaschine mit einer Entlüftungsleitung, in der eine Pumpeinrichtung zur Erhöhung des Wirkungsgrades des Ölabscheiders vorgesehen ist, um im Kurbelgehäuse ein Unterdruck gegenüber dem Umgebungsdruck zu erzeugen. Die Pumpeinrichtung ist dabei in Strömungsrichtung nach dem Ölabscheider angeordnet.

In der Schrift DE 20 2004 005 813 U1 wird eine Vorrichtung zum Absaugen von aerosolhaltigen Gasgemischen von einer Werkzeugmaschine beschrieben bei der ein Ölabscheider mit einer Druckentlastungseinrichtung in Form eines Bersttopfes im Fall einer Explosion oder Verpuffung eine entstehende Druckwelle gefahrlos abbaut.

Die Veröffentlichung US 2006/196482 A1 zeigt ein Kurbelgehäuseentlüftungssystem für eine Brennkraftmaschine ohne Drosselklappe mit einem Kanister und einer Pumpe, die das Blow-By Gas in den Ansaugtrakt fördert und einer zweiten Pumpe, die, beispielsweise als Strahlpumpe ausgebildet, ein Spülgas aus dem Kanister fördert um es in das Blow-By Gas zu mischen.

Die Schrift DE 20 2007 013 145 U1 offenbart einen Abscheider für ein mit Flüssigkeitstropfen oder Nebel kontaminiertes gasförmiges Medium mit einer Unterdruck erzeugenden Vorrichtung und mit einem Auslassbereich, der über einer Druckausgleichsleitung mit dem Einlassbereich verbunden ist zur Rückführung eines Teils des gereinigten gasförmigen Mediums.

Das Dokument DE 20 2006 011 229 U1 beschreibt einen Ölbehälter mit einem Entlüftungssystem für einen Kompressor mit einem Oxidationskatalysator, den die Ölbehälterluft vor Austritt aus dem Entlüftungssytem durchströmt.

Bei den oben beschriebenen Systemen können als Filterelemente Faserabscheider zur Tröpfchenabtrennung zum Einsatz kommen. Faserabscheider können sehr hohe Abscheidegrade erreichen, haben jedoch den Nachteil, dass an den Fasern auch feste Verschmutzungen abgelagert werden, welche im Laufe der Zeit den Faserverbund zusetzen können. Das Filterelement muss dann aufgrund des erhöhten Differenzdruckes getauscht werden.

Mechanische Abscheider, insbesondere Zyklone, haben diesen Nachteil nicht und können als Lebensdauerbauteile ausgeführt werden, sind jedoch bezüglich ihres Abscheidegrades begrenzt, wenigstens wenn ein bestimmter Differenzdruck nicht überschritten werden darf.

### Offenbarung der Erfindung

Die Erfindung betrifft eine Vorrichtung zur Abscheidung von Öl aus einem Luftstrom mit einem Filterelement und mindestens einer Druckbeaufschlagungseinheit des Luftstroms zur Durchströmung des Filterelements, beispielsweise zur Abscheidung von Öl aus den Kurbelwellengehäusegasen einer Brennkraftmaschine, wobei das gereinigte Gas bevorzugt dem Luftansaugweg der Brennkraftmaschine wieder zuführbar ist. Hierbei wird in vorteilhafter Weise mindestens ein zusätzlicher mechanischer Vorabscheider zur Abscheidung von Öl vor dem Filterelement und/oder mindestens ein mechanischer Nachabscheider nach dem Filterelement vorgesehen. Zur Druckbeaufschlagung des Luftstroms kann ein Verdichter oder gleichwirkend eine Pumpe vor oder hinter dem Filterelement angeordnet und bevorzugt mit Hilfe einer Regelung der Druckbeaufschlagungseinheit ein gleichmäßiger Unterdruck im Kurbelgehäuse erreicht werden. In der Vorrichtung eingebaute Ventile können unzulässige Druckzustände im Kurbelgehäuseentlüftungssystem verhindern.

Erfindungsgemäß wird vorgeschlagen, ein Filterelement, insbesondere ein Faserelement, mit einem mechanischen Vor- und/oder Nachabscheider zu kombinieren. Hierdurch kann eine gestufte Abtrennung von Verunreinigungen auch bei hohen Schmutzlasten und gleichzeitig hoher Anforderung an die Filtereffizienz bzw. Feinheit erfolgen. Grundlage für eine solche Kombination ist eine Druckbeaufschlagungseinheit bzw. ein Differenzdruckerhöhungsorgan. Diese kann einen Unter- oder Überdruck erzeugen und sollte dementsprechend entweder auf der Druck- oder der Saugseite (stromaufwärts oder stromabwärts) von den Abscheideorganen (Filterelement bzw. mechanischer Abscheider) angeordnet sein.

Die Druckbeaufschlagungseinheit kann hierbei z.B. eine Pumpe, z.B. eine Vakuumpumpe, insbesondere eine Drehschieberpumpe, ein Verdichter, ein Venturisystem oder ein anderes technisch geeignetes System sein. Durch die Druckbeaufschlagungseinheit kann ein fast frei skalierbares Druckgefälle erzeugt werden, wodurch die Randbedingung, dass das treibende Druckgefälle der Überdruck im Kurbelgehäuse ist, entfällt. Damit können die Differenzdruckverbraucher besonders günstig ausgelegt und gewählt werden.

Die kombinierte Abscheidung verläuft wie folgt: es wird eine Reihenschaltung von mindestens zwei der Abscheideorgane (mechanischer Vorabscheider und Filterelement oder mechanischer Nachabscheider und Filterelement) vorgenommen. Die Anordnung erfolgt in der Regel in aufsteigender Effizienz bezüglich der Abscheidung von Tröpfchen und Partikeln, kann jedoch ggf. auch anders gestaltet werden. Dem Faserabscheider sollte dabei in der Regel (mindestens) ein mechanischer Abscheider, insbesondere ein Zyklonabscheider, vorgeschaltet werden. Der Zyklonabscheider kann ein Einzel- oder Mehrzellenzyklon sein, geschaltet oder ungeschaltet, je nach den Systemanforderungen.

Zweck einer solchen Anordnung ist es, durch die langzeitstabile Funktion des Zyklonabscheiders möglichst viel Masse an Flüssigkeit und Feststoffen aus dem Gasstrom zu entfernen. Der Hauptanteil des Feststoffes, welcher zur Verblockung von Fasermedien beiträgt, ist Ruß, welcher wiederum zum größten Teil in der Flüssigkeit dispergiert vorliegt. Über die Abtrennung des größten Teiles der Masse des rußkontaminierten Öls in der Zyklonvorabscheidung wird dieses vom empfindlichen Faserabscheider ferngehalten und der vorgereinigte Gasstrom wird dem Faserabscheider zugeführt. Die verbliebenen Tröpfchen, welche geringe Durchmesser aufweisen, können dann über den effizienteren Faserabscheider vom Gasstrom getrennt werden. In der Summe entsteht so ein System, welches sehr effizient ist und eine hohe Standzeit aufweist. Weiterhin kann der kostenaufwändige Faserabscheider in der Größe begrenzt gehalten werden.

Prinzipiell wird also durch die Vorabscheidestufe(n) der Hauptanteil der Partikelmasse abgeschieden, während durch die Haupt- oder Schlußfilterstufe(n) die finale Effizienz des Gesamtsystems bestimmt wird. Es versteht sich, dass in einer vereinfachten Ausführung an Stelle des Zyklons auch ein anderer mechanischer Abscheider eingesetzt werden kann. Dies kann z.B. ein Prallabscheider, ein Labyrinthabscheider o.ä. sein.

Die Druckbeaufschlagungseinheit kann als Pumpe, vorzugsweise als Vakuumpumpe, beispielsweise als sogenannte Drehschieberpumpe, ausgeführt werden und ist dann in besonders vorteilhafter Weise hinter dem Filterelement zur Ansaugung des Luftstroms angeordnet.

Die Druckbeaufschlagungseinheit, insbesondere der Verdichter, kann auf einfache Weise extern elektrisch oder mechanisch angetrieben werden.

In einer Ausführungsform mit einer elektrisch angetriebenen Druckbeaufschlagungseinheit, insbesondere einem Verdichter, kann die Regelung elektronisch in Abhängigkeit vom dem im Kurbelgehäuse herrschenden Druck erfolgen.

In einer Ausgestaltung wird anstelle eines einfachen, aus dem Stand der Technik bekannten Druckregelventils, welches den Druck im Kurbelgehäuse in Abhängigkeit des Umgebungsdruckes durch das einfache Wirken einer Federkraft regelt, eine Druckregelung vorgesehen, welche direkt den Druck im Kurbelgehäuse der Brennkraftmaschine als Ist-Größe aufnimmt und diese mit der voreingestellten Sollgröße abgleicht. Die Regelung des Druckes erfolgt z.B. über einen zwischen Kurbelgehäuse und Ölabscheider, direkt in der Blow-By-Leitung befindlichen Verdichter, dessen Drehzahl über einen Frequenzumformer oder in anderer, dem Fachmann geläufigen Weise zu regeln ist. Die Drehzahl reguliert das Druckniveau vor und nach dem Verdichter und somit ebenfalls den Druck im Kurbelgehäuse. So kann unabhängig vom Beladungszustand des Ölabscheiders bzw. dessen bereits erreichten Lebensdauer und dem Ölgehalt im Blow-By-Gas, beziehungsweise dem Blow-By-Anfall, ein nahezu exakt konstanter Druck im Kurbelgehäuse eingeregelt werden.

Wird die Brennkraftmaschine abgestellt, geht die direkt mit der Motorsteuerung verbundene Druckbeaufschlagungseinheit, insbesondere der Verdichter, in den Ruhezustand. So kann eine Evakuierung des Kurbelgehäuses vermieden werden. Beim Anlassen der Brennkraftmaschine wird ebenfalls der Verdichter gestartet, so dass nahezu ohne Zeitverzug der Druck im Kurbelgehäuse eine definierte Höhe erreicht.

Das Regelorgan dieser Erfindung ist die Druckbeaufschlagungseinheit, insbesondere in Form des Verdichters. Der Verdichter kann in jeder denkbaren technischen Ausführung Verwendung finden, wobei unter dem Begriff Verdichter erfindungsgemäß eine Fördervorrichtung für kompressible Fluide, wie das Blow-By Gas verstanden wird.

In einer Ausgestaltung der Druckbeaufschlagungseinheit, z.B. als mechanisch angetriebene Pumpe oder als Verdichter, ist eine Verbindung des Antriebes mit der Brennkraftmaschine von Vorteil, insbesondere indem die Regelung des Druckes in dem Ölabscheider durch einen ventilgesteuerten Bypass-Kanal erfolgt. Die Kopplung der Druckbeaufschlagungseinheit an die Brennkraftmaschine kann beispielsweise über die Nockenwelle bzw. Kurbelwelle oder andere rotierende Bauteile der Brennkraftmaschine e r-folgen, die insbesondere in der Zylinderkopfhaube, im Kurbelgehäuse oder in den Nebenaggregaten der Brennkraftmaschine angeordnet sein können. Hierbei kann die Druckbeaufschlagungse inheit an dem rotierenden Bauteil angebracht und z.B. als Verdichterrad ausgebildet sein. Wird die Brennkraftmaschine abgestellt, geht die mechanisch mit dem rotierenden Bauteil gekoppelte Druckbeaufschlagungseinheit in den Ruhezustand und es kann eine Evakuierung des Kurbelgehäuses vermieden werden.

Es versteht sich, dass die Maßnahme, dass eine Druckbeaufschlagungseinheit für das Kurbelgehäusegas an einem rotierenden Bauteil der Brennkraftmaschine vorgesehen wird, einen Aspekt der Erfindung darstellt, der auch in Alleinstellung, d.h. bei Verwendung eines Filterelements ohne die Kombination mit einem Vor- oder Nachabscheider einen schützenswerten Gegenstand darstellt.

Vorzugsweise ist das Filterelement ein Luftentölelement, beispielsweise als Boxenausführung, das aus einem Mikrofasermaterial, vorzugsweise Glasfaser, hergestellt ist und das in an sich bekannter Weise zu einem Wickelelement oder zu einem sternförmigen Element geformt werden kann.

Wie oben dargestellt kann dem Ölabscheider bzw. das Filterelement in Strömungsrichtung ein Vorabscheider vorgeschaltet werden, der das Groböl abscheidet und/oder ein Nachabscheider, der das nach dem Ölabscheider noch im Gas verbliebene Feinöl abscheidet. Der Vorabscheider kann in Strömungsrichtung vor oder nach dem Verdichter oder der Pumpe angeordnet sein.

Eine vorteilhafte Ausgestaltung sieht einen Vorabscheider oder Nachabscheider mit einem tangentialen Eintritt vor. Besonders Zyklona bscheider sind für diesen Anwendungsfall vorteilhaft. Dabei kann ein Einzelzyklon zum Einsatz kommen wie auch mehrere parallel geschaltete Zyklone. Auch in Reihe geschaltete Zyklone sind hierbei vorteilhaft.

In einer weiteren Ausgestaltung ist das Filterelement in einem Gehäuse, insbesondere in einem Tauchrohr eines Abscheiders mit tangentialem Eintritt angeordnet. Durch die Anordnung des Filterelements in dem Gehäuse des Abscheiders, insbesondere des Zyklonabscheiders, wird ein kompaktes System erhalten und der Bauraum optimiert. Das Filterelement kann insbesondere in dem Tauchrohr des Zyklonabscheiders angeordnet werden, so dass die Vorabscheidung abgeschlossen ist, bevor der zu reinigende Gasstrom in das Filterelement eintritt.

Der Verdichter kann ein Kompressorschraubenelement aufweisen oder als Ladekompressor ausgestaltet sein.

In einer weiteren Ausführungsform verhindert ein Sicherheitsventil hinter der Entnahmestelle des Kurbelgehäuseentlüftungsgases aus dem Kurbelgehäuse einen unzulässig hohen Druck im Kurbelgehäuse. Bei zu hohem Druck, etwa bei einer Fehlfunktion oder einem Defekt der Brennkraftmaschine, öffnet das Sicherheitsventil und reduziert so den Druck im Kurbelgehäusesystem. Entweder wird der Druck ins Freie abgelassen oder mit einer zusätzlichen Leitung in den Ansaugtrakt der Brennkraftmaschine geführt.

Eine weitere vorteilhafte Ausführung sieht ein Rückschlagventil vor, dass bei unzulässiger Druckdifferenz zwischen Kurbelgehäuse und der Ölabscheidung einen Durchfluss des Öls aus dem Kurbelgehäuse in den Ansaugtrakt verhindert.

Ebenfalls von Vorteil ist ein Druckbegrenzungsventil oder eine Drossel in Form einer Blende in der Blow-By-Leitung vor dem Eintritt des gereinigten Blow-By-Gases in den Ansaugtrakt, die die Druckdifferenz zwischen dem Unterdruck im Ansaugtrakt und dem Druck in der Vorrichtung begrenzt. So wird ausgeschlossen, dass die Druckdifferenz zwischen Ansaugtrakt und Kurbelgehäuseentlüftung einen unzulässig hohen Wert erreicht.

Eine weitere Ausführungsform weist einen hydraulisch angetriebenen Verdichter auf, der stromabwärts auf der druckführenden Seite einer Ölpumpe der Brennkraftmaschine mittels des Öldruckes angetrieben wird und auf der stromzuführenden Seite der Ölpumpe diese das vom Ölabscheider abgeschiedene Öl ansaugt. So kann die ohnehin vorhandene Ölpumpe im Ölkreislauf der Brennkraftmaschiene ohne großen Zusatzaufwand zusätzlich zur ihrer eigentlichen Aufgabe, das Öl zu fördern, die Energie für die Druckerzeugung in der Kurbelgehäuseentlüftung liefern.

Besonders vorteilhaft ist die Ausgestaltung der Erfindung in einem Ölmodul, bei dem eine Auswahl der beschriebenen Funktionen in einem Bauteil integriert ist, das als Modul an die Brennkraftmaschine angeflanscht wird.

### Kurze Beschreibung der Zeichnungen

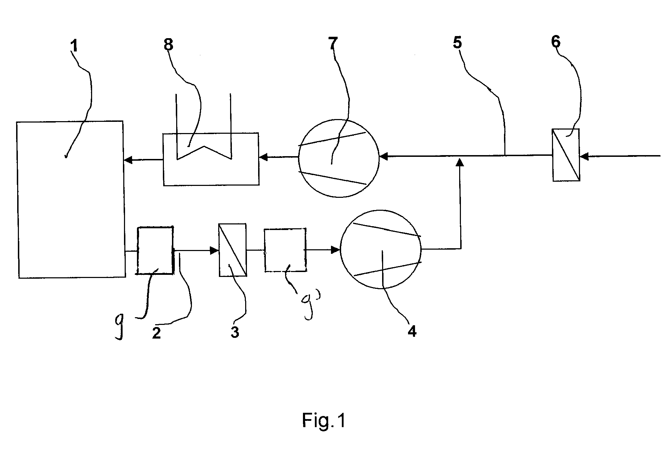

Die Erfindung wird anhand der Figur 1 der Zeichnung mit einem Ausführungsbeispiel erläutert, das schematisch die Kurbelwellengehäuseentlüftung einer Brennkraftmaschine mit einem Entölelement, einem Vor- sowie einem Nachabscheider und einer Pumpe darstellt.

Die Figur 2 zeigt schematisch ein Ausführungsbeispiel einer Kurbelgehäuseentlüftung mit einem Vorabscheider vor der Pumpe und einer Anordnung der Pumpe vor dem Ölabscheider.

Die Figur 3 ist die schematische Darstellung einer Ausführung einer Kurbelgehäuseentlüftung zu entnehmen, bei der ein Verdichter stromabwärts auf der druckführenden Seite einer Ölpumpe angetrieben wird.

Die Figur 4 ist die schematische Darstellung einer Ausführung einer Kurbelgehäuseentlüftung mit einem Zyklon-Vorabscheider und einem Filterelement, die in einem gemeinsamen Gehäuse integriert sind.

Die Figur 5 ist die schematische Darstellung einer Ausführung einer Kurbelgehäuseentlüftung, bei der ein Verdichterrad an einer Nockenwelle der Brennkraftmaschine als Druckbeaufschlagungseinheit vorgesehen ist.

### Ausführungsform(en) der Erfindung

In Figur 1 ist eine schematische Darstellung eines Ausführungsbeispiels der Erfindung gezeigt, die eine Brennkraftmaschine 1 zeigt, deren Kurbelwellengehäusegase über eine Blow-By-Leitung 2 einem Luftentölungselement 3 zugeführt werden. Das Luftentölungselement 3 ist hier als Boxenvariante aus einem Mikrofasermaterial, vorzugsweise Glasfaser, gebildet. Ein Vorabscheider 9 in Form eines Zyklonabscheiders dient hierbei der Vorreinigung der Kurbelwellengehäusegase, bevor diese dem Faserelement 3 zugeführt werden. Die in dem Faserelement 3 gereinigten Kurbelwellengehäusegase werden nachfolgend in einem mechanischen Nachabscheider 9', z.B. einem Prallabscheider, einem Labyrinthabscheider oder einem weiteren Zyklonabscheider weiter gereinigt.

Das Luftentölungselement 3, der Vorabscheider 9 und der Nachabscheider 9' sind auf der Saugseite eines Luftförderorgans, hier eine Pumpe 4, angeordnet, das zum Beispiel als Vakuumpumpe, beispielsweise eine elektrisch oder mechanisch angetriebene Drehschieberpumpe, ausgeführt ist.

Weiterhin wird die somit entölte Luft in die Luftansaugleitung 5 für die Brennkraftmaschine 1 geführt, wobei die Ansaugluft zuvor über einen Luftfilter 6 auf der Ansaugseite gefiltert worden ist. In an sich bekannter Weise wird dann die Ansaugluft über einen Turbolader 7 und einen Ladeluftkühler 8 der Brennkraftmaschine 1 zugeführt.

Es versteht sich, dass alternativ oder zusätzlich zu der Pumpe 4, die als Unterdruckerzeugungsorgan nach der Reihenschaltung aus Vorabscheider 9, Filterelement 3 und Nachabscheider 9' angeordnet ist, eine Druckbeaufschlagungseinheit auch vor der Reihenschaltung angeordnet sein kann, um einen Überdruck zu erzeugen. Typischer Weise sind in der vorliegenden Anwendung Druckbeaufschlagungseinheit(en) vor bzw. nach der Reihenschaltung der Abscheideorgane (Faserabscheider bzw. mechanische Abscheider (Zyklon)) angeordnet, nicht jedoch zwischen den einzelnen Abscheideorganen.

Es versteht sich, dass eine Mehrzahl von Faserelementen 3 und mechanischen Abscheidern, insbesondere Zyklonabscheidern, in beliebiger Anordnung in Reihe geschaltet werden können, zweckmäßiger Weise in folgender Reihenfolge: Druckerhöhungsorgan / 1-n Zyklone / 1-n Faserabscheider oder 1-n Zyklone / 1-n Faserabscheider / Unterdruckerzeugungsorgan. Für spezielle Anwendungen ist sind u.a. auch folgende Anordnungen möglich: Druckerhöhungsorgan / 1-n Zyklone / 1-n Faserabscheider / Unterdruckerzeugungsorgan, Druckerhöhungsorgan / 1-n Zyklone / 1-n Faserabscheider / 1-n Zyklone, Druckerhöhungsorgan / 1-n Faserabscheider / 1-n Zyklone / 1-n Faserabscheider, Druckerhöhungsorgan / 1-n Faserabscheider / 1-n Zyklone / 1-n Faserabscheider, 1-n Zyklone / 1-n Faserabscheider / 1-n Zyklone / Unterdruckerzeugungsorgan, 1-n Faserabscheider / 1-n Zyklone / 1-n Faserabscheider / Unterdruckerzeugungsorgan, sowie 1-n Faserabscheider /1-n Zyklone /1-n Faserabscheider / Unterdruckerzeugungsorgan.

Es versteht sich, dass an Stelle von Zyklonen ggf. auch andere mechan i-sche Abscheider verwendet werden können und auch komplexere Kombinationen als die oben beschriebenen möglich sind.

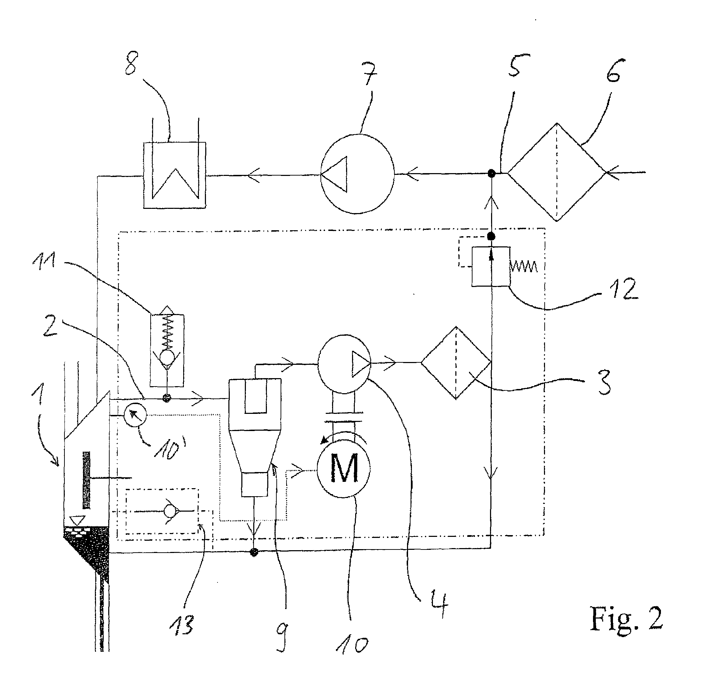

Die Figur 2 zeigt schematisch ein Ausführungsbeispiel einer Kurbelgehäuseentlüftung einer Brennkraftmaschine mit einem Vorabscheider 9 vor der Pumpe 4 und der Pumpe 4 vor dem Ölabscheider 3. Eine Pumpe 4 wird benötigt, um Blow-By-Gase durch einen hochabscheidenden Ölabscheider 3, der naturgemäß einen hohen Druckverlust besitzt, zu drücken. Ein möglicher Antrieb kann beispielsweise über einen separaten, drehzahlgeregelten Elektromotor 10 er folgen, der in Abhängigkeit vom Kurbelgehäusedruck geregelt wird. Dazu ist ein Drucksensor 10' in Kurbelgehäuse angebracht, der den Druck detektiert und ein entsprechendes Signal an eine Regelung weiterleitet. Es wird ein Sicherheitsventil 11 hinter der Blow-By-Gas-Entnahmestelle des Kurbelgehäuses angeordnet, um einen unerwartet hohen Kurbelgehäusedruck schnell abführen zu können. Ein Druckregelventil 12, welches sich zwischen dem Ölabscheider 3 und der Einleitstelle zwischen Luftfilter 6 und Turbolader 7 befindet, begrenzt den entstehenden Unterdruck in der Ölrückführleitung, welcher bei ansteigender Drehzahl der Brennkraftmaschine und anwachsendem Ansaugvolumenstrom durch den Luftfilter 6 im vorderen Bereich des Ansaugtraktes erzeugt wird. Durch dieses Druckregelventil 12 wird das Ansaugen des Öls aus der Ölwanne verhindert und die kontinuierliche Ölrückführung gewährleistet.

Je nach Platzierung der Anschlussstelle der Ölrückführung im Kurbelgehäuse, ist optional ein Rückschlagsperrventil 13 in der Ölrückführung anstelle einer direkten Verbindung zwischen Kurbelgehäuse und Ölrückführung vorgesehen, das verhindert, dass ungereinigtes Blow-By-Gas über den Ölrücklauf des Ölabscheiders auf die Reinseite stromabwärts hinter den hochabscheidenden Ölabscheider 3 gelangt, falls der Druck im Kurbelgehäuse unzulässig ansteigt. Die Verwendung eines Rückschlagsperrventils ist unabhängig von der Lage der Anschlussstelle der Ölrückführung im Kurbelgehäuse oberhalb oder unterhalb des Ölspiegels, wobei eine Verwendung bei einem Anschluss über dem Ölspiegels von Vorteil ist.

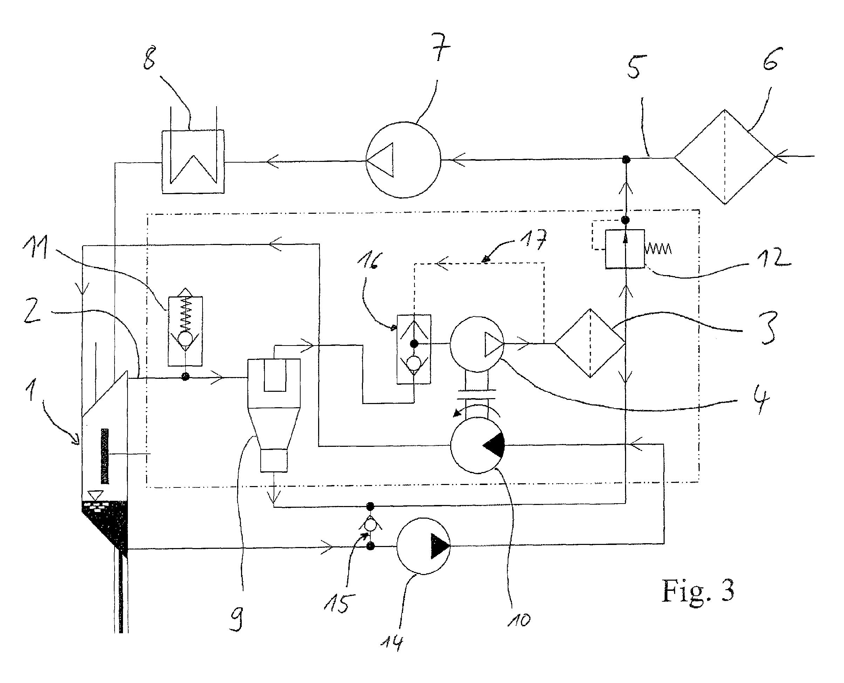

Die Figur 3 zeigt das Schema einer Ölabscheidung, bei der ein Verdichter 4 stromabwärts auf der druckführenden Seite einer Ölpumpe 14 angetrieben wird. Auf der stromzuführenden Seite, der Saugseite der Ölpumpe 14, wird das vom dem hochabscheidenden Ölabscheider 3 abgeschiedene Öl über ein Rückschlagventil 15 abgesaugt. Das Rückschlagventil verhindert, dass bei einem Überdruck im Kurbelgehäuse das Öl auf die Reinseite der Ölabscheidung gelangt. Bei einem Verdichter 4, welcher direkt durch die Brennkraftmaschine 1 oder deren Nebenaggregaten angetrieben wird, ist eine mit einem Umschaltventil 16 versehene Umgehungsleitung 17 von der stromabführenden Seite zur stromzuführenden Seite des Verdichters 4 installiert. Diese Maßnahme soll verhindern, dass bei variierenden Blow-By-Mengen, erzeugt durch Variation des Lastzustandes und der Drehzahl der Brennkraftmaschine, ein unzulässig großer Unterdruck im Kurbelgehäuse, welcher zu Undichtigkeiten und somit zum Eintrag von Umgebungsluft an der Ölwanne führt, entsteht.

Das Umschaltventil 16 ist in einer vorteilhaften Ausgestaltung als ein federgeregeltes Wechselventil ausgeführt, als ein Druckregelventil, das nicht mit der Atmosphäre kommuniziert. Es wird als eine Art pumpeneigenes Bypass-Ventil eingesetzt, das den Unterdruck im Kurbelgehäuse auf einen bestimmten Wert hält, während die Pumpe 4 dann das Blow-By-Gas in einem geschlossenen Kreislauf fördert, um zu erreichen, dass der Ölstrom zum Antrieb 10 einer mechanischen Pumpe 4, unverändert bleibt während die Pumpe nicht weiter Blow-By-Gas aus dem Kurbelgehäuse herausfördern kann. Dies hätte ein en zu hohen Ansaugunterdruck zur Folge und würde somit unter Umständen das Kurbelgehäuse schädigen.

Vor dem Verdichter 4 kann eine Vorabscheidung 9, beispielsweise durch einen Zyklon, integriert werden, um den Verdichter 4 und den hochabscheidenden Ölabscheider 3 nicht zur sehr mit dem im Öl transportierten Schmutzteilchen, beispielsweise Ruß, von der Brennkraftmaschine 1 zu belasten und dadurch die Standzeit des Systems zu verlängern. Das nach Abscheidung 3 nahezu ölfreie Blow-By-Gas wird vor den Abgasturbolader 7 und in Strömungsrichtung der Verbrennungsluft nach dem Luftfilter 6 in den Ansaugtrakt der Brennkraftmaschine 1 geleitet.

Diese hier beschriebene Variante der Kurbelgehäuseentlüftung mittels einer Pumpe 4 oder einem Verdichter 4 kann vorteilhaft in einem kompletten Ölmodul einer Brennkraftmaschine 1 realisiert werden.

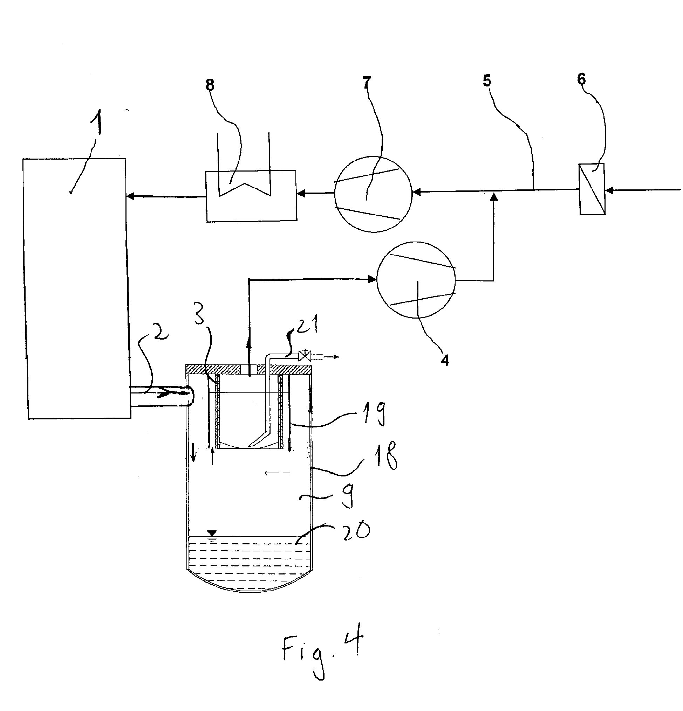

In Figur 4 ist schematisch eine Ausführung der Vorrichtung zur Abscheidung von Öl gezeigt, welche sich von der in Fig. 1 gezeigten Vorrichtung dadurch unterscheidet, dass das Filterelement 3 und der Vorabscheider 9 in Form eines Zyklonabscheiders in einem gemeinsamen Gehäuse 18 untergebracht sind, wobei auf einen Nachabscheider verzichtet wurde. Das im Wesentlichen zylindrische Faser-Filterelement 3 ist hierbei in einem mittig in dem Gehäuse 18 angeordneten Tauchrohr 19 integriert.

Das tangential in das Gehäuse 18 einströmende Kurbelgehäusegas wird zunächst an der Wand des Tauchrohrs 19 in Rotation versetzt, wo durch Verunreinigungen, insbesondere Öltröpfchen, aus dem Gas abgeschieden werden und sich in einem Sammelraum 20 im unteren Bereich des Gehäuses 18 sammeln.

Das auf diese Weise vorgereinigte Kurbelgehäusegas tritt dann in einen Ringraum ein, der zwischen der äußeren Umfangsfläche des Filterelements 3 und der Innenseite des Tauchrohrs 19 gebildet ist. Das Filterelement 3 wird von Außen nach Innen von dem Kurbelgehäusegas durchströmt, wobei weitere Verunreinigungen abgeschieden werden. Der zylindrische Innenraum des Filterelements 3 bildet die Reinseite und ist vom Rest des Innenraums des Gehäuses 18 durch eine untere Endscheibe des Filterelements 3 dichtend abgetrennt.

Das an dem Filterelement 3 abgeschiedene Öl sammelt sich durch die Schwerkraftwirkung an der Oberseite der Endscheibe und kann über eine Ansaugleitung 21 abgesaugt werden. Das auf der Reinseite des Filterelements 3 befindliche Kurbelgehäusegas wird von der Pumpe 4 angesaugt und tritt durch einen in dem Gehäuse 18 vorgesehenen, oberen Auslass aus. Es versteht sich, dass die in Fig. 4 gezeigte Integration des Filterelements 3 in das Gehäuse 18 des Zyklonabscheiders 9 auch modifiziert werden kann, z.B. kann könnte das Filterelement 3 von Innen nach Außen durchströmt werden. Bei dem Filterelement muss es sich insbesondere auch nicht zwingend um ein Element mit zylindrischer Geometrie handeln.

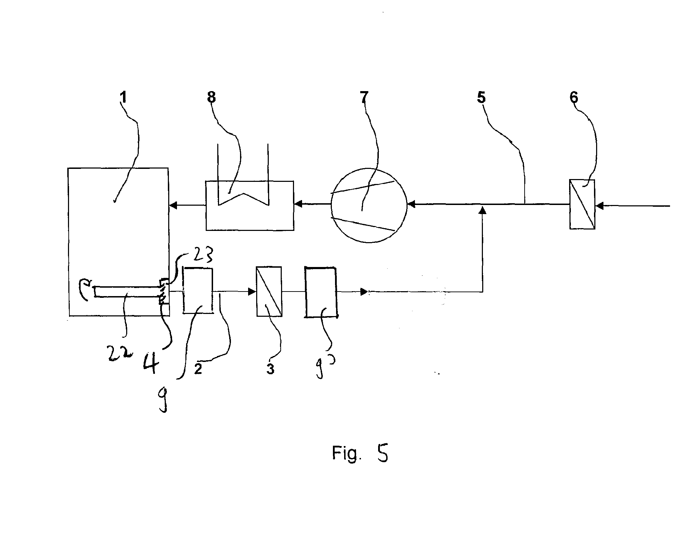

Figur 5 zeigt schließlich eine Ausführung einer Vorrichtung zur Ölabscheidung, welche sich von der in Fig. 1 gezeigten Vorrichtung dadurch unterscheidet, dass als Druckbeaufschlagungseinheit an Stelle einer Pumpe, die nach der Reihenschaltung aus Vorabscheider 9, Filterelement 3 und Nachabscheider 9' angeordnet ist, ein Verdichterrad 4 als Druckbeaufschlagungseinheit vor der Reihenschaltung vorgesehen ist. Das Verdichterrad 4 ist hierbei an einem rotierendem Bauteil der Brennkraftmaschine 1 in Form einer Nockenwelle 22 angebracht, dient als Druckerhöhungsorgan und verdichtet die durch einen Austritt 23 der Brennkraftmaschine 1 an einer Zylinderkopfhaube hindurch tretenden Kurbelgehäusegase, so dass diese den Vorabscheider 9, das Filterelement 3 und den Nachabscheider 9' mit erhöhtem Druck durchströmen können.

Es versteht sich, dass ggf. das Verdichterrad auch an einem Teil bereich der Nockenwelle angebracht werden kann, der aus der Brennkraftmasch i-ne bzw. der Zylinderkopfhaube heraus ragt. Die Nockenwelle mit Verdichterrad kann einstückig ausgebildet sein, es ist aber auch möglich, das Verdichterrad mittels geeigneter Befestigungsmittel an der Nockenwelle zu fixieren. Das Druckerhöhungsorgan, insbesondere in Form des Verdichterrads, kann selbstverständlich auch an anderen rotierenden Bauteilen der Brennkraftmaschine angeordnet bzw. mit diesen mechanisch gekoppelt werden.

Es versteht sich, dass die in Zusammenhang mit Fig. 4 beschriebene Kombination von Filterelement 3 und Zyklon-Abscheider 9 in einem gemeinsamen Gehäuse bzw. die im Zusammenhang mit Fig. 5 beschriebene Ausführung der Druckbeaufschlagungseinheit 4 auch in zweckmäßiger Weise z.B. in den in Fign. 2 oder 3 gezeigten Vorrichtungen Verwendung finden können.

## Patentansprüche

1. Vorrichtung zur Abscheidung von Öl aus den Kurbelgehäusegasen einer Brennkraftmaschine (1), wobei das gereinigte Gas bevorzugt dem Luftansaugweg der Brennkraftmaschine (1) wieder zugeführt wird, mit einem Filterelement (3) und mindestens einer Druckbeaufschlagungseinheit (4) für das Kurbelgehäusegas zur Durchströmung des Filterelements (3), **dadurch gekennzeichnet, dass** mindestens ein zusätzlicher mechanischer Vorabscheider (9) zur Abscheidung von Öl vor dem Filterelement (3) und/oder mindestens ein mechanischer Nachabscheider (9') nach dem Filterelement (3) vorgesehen ist, wobei als Druckbeaufschlagungseinheit (4) des Luftstroms bevorzugt eine Pumpe oder ein Verdichter vor oder hinter dem Filterelement (3) angeordnet ist und insbesondere eine Regelung der Druckbeaufschlagungseinheit (4) in Abhängigkeit vom herrschenden Druck im Kurbelgehäuse erfolgt.

2. Vorrichtung nach Anspruch 1, **dadurch gekennzeichnet, dass** die Druckbeaufschlagungseinheit (4) elektrisch angetrieben ist.

3. Vorrichtung nach einem der Ansprüche 1 bis 2, **dadurch gekennzeichnet, dass** die Druckbeaufschlagungseinheit (4) mechanisch angetrieben ist.

4. Vorrichtung nach einem der vorhergehenden Ansprüche, **dadurch gekennzeichnet, dass** der Antrieb der Druckbeaufschlagungseinheit (4) durch eine mechanische Kopplung mit der Brennkraftmaschine (1) erfolgt und bevorzugt die Regelung des Druckes in der Vorrichtung durch eine ventilgesteuerte Bypass-Leitung erfolgt.

5. Vorrichtung nach Anspruch 4, **dadurch gekennzeichnet, dass** die Druckbeaufschlagungseinheit (4) in mechanischem Kontakt mit einem rotierenden Bauteil (22) der Brennkraftmaschine (1) steht und insbesondere an dem rotierenden Bauteil (22) angebracht ist.

6. Vorrichtung nach Anspruch 5, **dadurch gekennzeichnet, dass** die Druckbeaufschlagungseinheit als an dem rotierenden Bauteil (22) angebrachtes Verdichterrad (4) ausgebildet ist.

7. Vorrichtung nach einem der vorhergehenden Ansprüche, **dadurch gekennzeichnet, dass** das Filterelement (3) ein Luftentölelement ist, das aus einem Mikrofasermaterial, vorzugsweise Glasfaser, hergestellt ist, das zu einem Wickelelement oder zu einem sternförmigen Element geformt ist und insbesondere von Außen nach Innen durchströmt wird.

8. Vorrichtung nach einem der vorhergehenden Ansprüche, **dadurch gekennzeichnet, dass** der mechanische Vorabscheider (9) in Strömungsrichtung vor der Pumpe (4) angeordnet ist.

9. Vorrichtung nach einem der vorhergehenden Ansprüche, **dadurch gekennzeichnet, dass** der mechanische Vorabscheider (9) und/oder der mechanische Nachabscheider (9') ein Abscheider mit einem tangentialem Eintritt, insbesondere ein Zyklonabscheider ist.

10. Vorrichtung nach Anspruch 9, **dadurch gekennzeichnet, dass** das Filterelement (3) in einem Gehäuse (18), insbesondere in einem Tauchrohr (19), des Abscheiders (9) mit tangentialem Eintritt angeordnet ist.

11. Vorrichtung nach einem der vorhergehenden Ansprüche, bei dem der mechanische Vorabscheider (9) und/oder der mechanische Nachabscheider (9') als Prallabscheider oder als Labyrinthabscheider ausgebildet sind.

12. Vorrichtung nach einem der vorhergehenden Ansprüche, **dadurch gekennzeichnet, dass** der Verdichter (4) ein Kompressorschraubenelement aufweist oder als Ladekompressor ausgestaltet ist.

13. Vorrichtung nach einem der vorhergehenden Ansprüche, **dadurch gekennzeichnet, dass** die die Vorrichtung ein Sicherheitsventil (11) hinter der Entnahmestelle des Kurbelgehäuseentlüftungsgases aufweist, welches einen unzulässig hohen Druck im Kurbelgehäuse verhindert.

14. Vorrichtung nach einem der vorhergehenden Ansprüche, **dadurch gekennzeichnet, dass** die die Vorrichtung ein Rückschlagventil (15) aufweist, dass bei unzulässiger Druckdifferenz zwischen Kurbelgehäuse und der Ölabscheidung (3, 9) einen Durchfluss des Öls aus dem Kurbelgehäuse in den Ansaugtrakt (5) verhindert und/oder ein Druckbegrenzungsventil (12), das die Druckdifferenz zwischen dem Unterdruck im Ansaugtrakt (5) und dem Druck in der Vorrichtung begrenzt.

15. Vorrichtung nach einem der vorhergehenden Ansprüche, **dadurch gekennzeichnet, dass** die die Vorrichtung einen hydraulisch angetriebenen Verdichter (4) aufweist, der stromabwärts auf der druckführenden Seite einer Ölpumpe (14) einer Brennkraftmaschine (1) mittels des Öldruckes angetrieben wird und auf der stromzuführenden Seite der Ölpumpe (14) das vom Ölabscheider (3, 9) abgeschiedene Öl ansaugt.
